# EUROPEAN PATENT APPLICATION

(11) **EP 2 914 025 A1**
(43) Date of publication of application: **02.09.2015**
(21) Application number: 13849461.2
(22) Date of filing: 09.09.2013
(51) Int. Cl.: H04W 4/08, H04W 36/22, H04W 28/08

(54) **NETWORK MANAGEMENT METHOD AND DEVICE**

(30) Priority: 23.10.2012 CN 201210407346
(71) Applicant: ZTE Corporation, Guangdong Province 518057 (CN)
(72) Inventor: WU, Chunhui, Shenzhen Guangdong Province 518057 (CN)
(74) Representative: Novagraaf Technologies
(86) International application number: PCT/CN2013/083142
(87) International publication number: WO 2014/063538

(57) **Abstract**

The present invention provides a method and device for managing a network. The method comprises: a new class named Group is added in a 3GPP standard model; and new properties a self group and a related group are added in a NodeB function (NodeBFunction) and a corresponding relationship between the Group and the NodeB is established. The present invention solves the problem of difficult network management and has the beneficial effect of easy network management.

## Description

### Technical field

The present invention relates to the field of communications, and in particular to a method and device for managing a network.

### Background

In a communication network, the network is composed of a plurality of communication nodes, and these communication nodes, i.e. network nodes, are called network elements. The network elements are connected via communication lines which include fiber-optic cables and the like forms. In addition, the network elements are dispersed and distributed in various regions, when devices of these network elements need to be configured, maintained and monitored, a central network management system is needed to configure, maintain and monitor various nodes of the network by remote communication.

A Centralized Radio Access Network (C-RAN) is a novelty of a radio access network architecture, due to the mobility of the user over time, the tidal effect of service volume such as voice and data will occur to some related fields, for those fields having no service, there is a problem of waste of baseband, traffic resources and energy within part of time. For solving this problem, the C-RAN network proposes to centrally deploy and dynamically schedule the resources of a Band width Based Unit (BBU), so as to serve more radio service requirements.

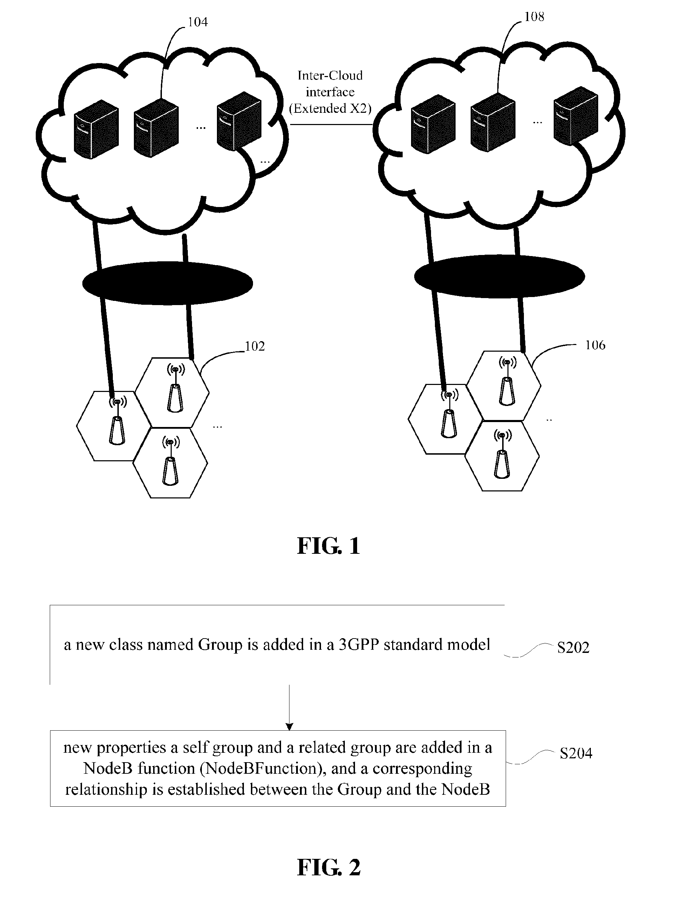

Fig. 1 is a structural schematic diagram of a composition relationship of a C-RAN network architecture and various network elements according to the related art, as shown in Fig. 1, when the load of a radio frequency unit cloud (RU CLOUD) A102 increases, the load of a digital processing unit cloud (DU CLOUD) A104 related thereto also increases, at this moment, the load of an RU CLOUD N106 reduces because of tidal effect, the load of a DU CLOUD 108 also correspondingly reduces, if part of the service of an RU CLOUD A102 is transferred to the DU CLOUD N106 for load sharing, the resource sharing is achieved; and when the load on the DU CLOUD N106 increases, part of the service also can be transferred to the DU CLOUD A102 for processing. The DU CLOUD 104 and the RU CLOUD 108 communicate by an internal cloud interface, i.e. an extended X2 interface. In this way, on the condition of not increasing the investment, the communication requirements are met, and the rate of equipment utilization is improved.

Compared with the traditional Radio Access Network (RAN), the C-RAN architecture has made a great deal of technological innovation. A Digital Unit (DU) and a Radio Unit (RU) of a NodeB are separately deployed, and the DU and the RU are separated geographically so as to form a dynamic or semi-dynamic network topological connection. Due to the profound transformation, the management of the C-RAN increases many difficulties to the network management and brings many problems to the compatibility of the original management network data model.

Aiming at the problem in the related technology that the network management is relatively difficult, no effective solution has been presented.

### Summary

A method and device for managing a network is provided in the embodiments of the present invention to at least solve the above-mentioned problem.

According to one aspect of the present invention, a method for managing a network is provided, wherein the method comprises: adding a new class named Group in a 3GPP standard model; and adding new properties a subordinate group and a related group in a NodeB logic function (NodeBFunction), and establishing a corresponding relationship between the Group and the NodeB.

Preferably, adding the new class named Group in the 3GPP standard model comprises: adding the new class named Group in the 3GPP standard model, wherein properties of the Group comprises a unique group identifier and at least one NodeB logical function (NodeBFunction).

Preferably, establishing the corresponding relationship between the Group and the NodeB comprises: establishing a corresponding relationship between the NodeB and its self group as well as its related group.

Preferably, establishing the corresponding relationship between the NodeB and its self group as well as its related group comprises: establishing a corresponding relationship between the NodeB and its self group, wherein one self group corresponds to at least one NodeB, and one NodeB can only be subordinate to one self group; and establishing a corresponding relationship between the NodeB and its related group, wherein the related group comprises at least one group except the self group of the NodeB.

Preferably, after the corresponding relationship between the group and the NodeB is established, the method further comprises at least one of the following: based on that a load of a certain NodeB exceeds a threshold value of the NodeB, transferring at least part of the services of the NodeB to other NodeBs within the group or to a certain NodeB of other groups according to the corresponding relationship; and based on that a load of a certain group exceeds a threshold value of the certain group, transferring at least part of the services of the group to other groups according to the corresponding relationship.

Preferably, the network comprises a Centralized Radio Access Network C-RAN and a traditional Radio Access Network RAN.

According to another aspect of the embodiments of the invention, a device for managing a network is provided, the device comprising: an adding component configured to add a new class named Group in a 3GPP standard model; and an establishing component configured to add new properties a self group and a related group in a NodeB logic function (NodeBFunction) to establish a corresponding relationship between the group and the NodeB.

Preferably, the adding component is configured to add the new class named Group in the 3GPP standard model, wherein the property of the group comprises a unique group identifier and at least one class NodeBFunction.

Preferably, the establishing component is configured to establish a corresponding relationship between the NodeB and its self group, wherein one self group corresponds to at least one NodeB, and one NodeB can only be self to one self group, and establish a corresponding relationship between the NodeB and its related group, wherein the related group comprises at least one group except the self group of the NodeB. Preferably, the device further comprises a transferring component which is configured to transfer, based on that a load of a certain NodeB exceeds a threshold value of the NodeB, at least part of the services of the NodeB to other NodeBs within the group or to a certain NodeB of other groups according to the corresponding relationship; and/or transfer, based on that the load of a certain group exceeds a threshold value of the group, at least part of the services of the group to other groups according to the corresponding relationship.

By means of the embodiments of the present invention, by adding a new class named Group in a 3GPP standard model and adding new properties a self group and an related group in a NodeB Function (NodeBFunction) to establish a corresponding relationship between the group and the NodeB, the problem of difficult network management is solved so as to achieve the effect of easy network management.

### BRIEF DESCRIPTION OF THE DRAWINGS

Drawings, provided for further understanding of the present invention and forming a part of the specification, are used to explain the present invention together with embodiments of the present invention rather than to limit the present invention. In the drawings:
Fig. 1 is a structural schematic diagram of a composition relationship of a C-RAN network architecture and various network elements according to the related art;
Fig. 2 is a flowchart of a method for managing a network according to an embodiment of the present invention;
Fig. 3 is a structural block diagram of a device for managing a network according to an embodiment of the present invention;
Fig. 4 is a structural schematic diagram of a management object of a C-RAN according to an embodiment of the present invention;
Fig. 5 is a flowchart of a coordinated management method in a C-RAN according to an embodiment of the present invention;
Fig. 6 is a flowchart of adding a NodeB according to an embodiment of the present invention;
Fig. 7 is a flowchart of setting a relationship between a group and a NodeB according to an embodiment of the present invention;
Fig. 8 is a flowchart of setting a relationship between a group and a NodeB according to an embodiment of the present invention; and
Fig. 9 is a flowchart of deleting a group according to an embodiment of the present invention.

### Detailed Description of the Embodiments

The present invention is described below in detail by reference to the accompanying drawings in conjunction with embodiments. Note that, the embodiments of the present invention and the features of the embodiments can be combined with each other if there is no conflict.

### Embodiment I

Considering that the evolution of the traditional network towards a C-RAN network architecture will be a relatively long process, the co-management of the C-RAN and the traditional network is a basic requirement for network management; therefore, a method for managing a network is provided in an embodiment of the present invention to solve the problems of BBU centralized management and unified resource scheduling.

Fig. 2 is a flowchart of a method for managing a network according to an embodiment of the present invention, and as shown in Fig. 2, the method includes the following steps.

In step S202, a new class named Group is added in a 3GPP standard model.

In step S204, new properties a self group and a related group are added in a NodeB function (NodeBFunction), and a corresponding relationship is established between the group and the NodeB.

By means of the above-mentioned steps, a new model is established, By newly adding the Group and newly adding the self group and the related group, the traditional network has a strong compatibility, so that great convenience is provided for the wireless network for the co-management of network management, furthermore, strong flexibility is also provided; by setting the self group (selfgroup) and the related group (relatedGroupList), the NodeB, whether it is distributed or concentrated physically, is no longer an island logically and becomes a cluster logically. By setting the self group (selfgroup), the NodeBs within a group become a cluster; and by setting the related group (relatedGroupList), the clusters of the NodeB may share resources with each other, which is equivalent to expand the clusters. In addition, the network management may flexibly set the size of the cluster according to various strategies.

A new class named Group is added in a 3GPP standard model, wherein the property of the Group comprises a unique group identifier and at least one class NodeBFunction. By means of the above-mentioned steps, a corresponding relationship between the Group and the NodeBFunction, i.e. between the group and the NodeB is established. The property of the group also may not comprise the NodeBFunction, such a group is an empty group.

There are various kinds of manners to establish the corresponding relationship between the group and the NodeB. Preferably, the corresponding relationship between the NodeB and its self group as well as its related group may be established. More preferably, a corresponding relationship between the NodeB and its self group may be established, wherein one self group corresponds to at least one NodeB, and one NodeB can only be subordinate to one self group, and then a corresponding relationship between the NodeB and its related group is established, wherein the related group comprises at least one group except the self group of the NodeB. By means of the above-mentioned steps, it may be ensured that the Group only manages a group of NodeBs, each NodeB is only directly related with one Group, and it is not allowed that one NodeB is managed by a plurality of groups. Of course, one self group also may correspond to 0 group, i.e. empty group, and one NodeB also may be not related to any one group.

After the corresponding relationship between the group and the NodeB is established, further, based on that a load of a certain NodeB exceeds a threshold value of the certain NodeB, at least part of services of the NodeB to other NodeBs may be transferred within the group or to a certain NodeB of other groups according to the corresponding relationship; and/or based on that a load of a certain group exceeds a threshold value of the certain group, at least part of the services of the group may be transferred to other groups according to the corresponding relationship. By means of the above-mentioned steps, the function of transferring service when the load is too large can be performed.

The network in the embodiments of the present invention may comprise a C-RAN and other traditional networks, and preferably, the traditional network may be a traditional RAN.

### Embodiment II

A device for managing a network is further provided in one embodiment and is configured for implementing the embodiments and preferred implementations above, and what has been described will not be stated redundantly. The term "component" as used below may be a combination of the software and/or hardware which can realise a pre-determined function. Although the apparatus described in the embodiments below is preferably implemented with software, implementation with hardware, or a combination of software and hardware can also be conceived.

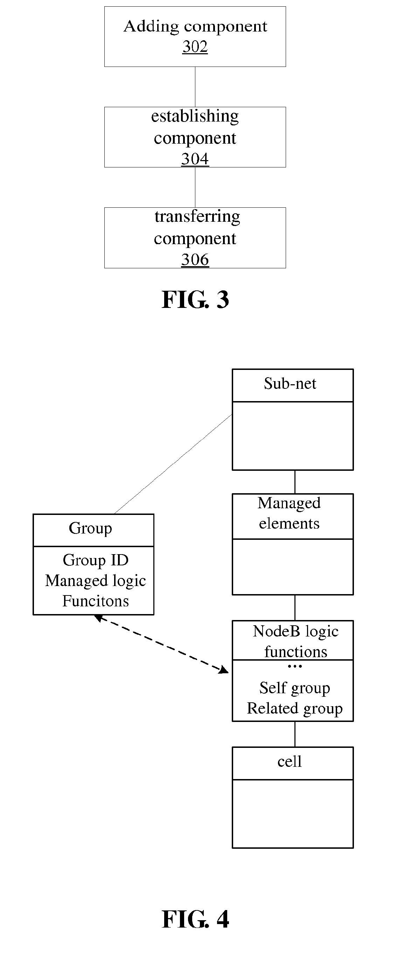

Fig. 3 is a structural block diagram of a device for managing a network according to an embodiment of the present invention, and as shown in Fig. 3, the device includes an adding component 302 and an establishing component 304.

The adding component 302 is configured to add a new class named Group in a 3GPP standard model.

The establishing component 304 is configured to add new properties a self group and a related group in a NodeB logic function (NodeBFunction), and to establish a corresponding relationship between the Group and the NodeB.

Preferably, the adding component 302 is configured to add the new class named Group in the 3GPP standard model, wherein properties of the group comprises a unique group identifier and at least one class NodeBFunction.

Preferably, the establishing component 304 is configured to establish the corresponding relationship between the NodeB and its self group, wherein one self group corresponds to at least one NodeB, and one NodeB can only be subordinate to one self group, and establish a corresponding relationship between the NodeB and its related group, wherein the related group comprises at least one group except the self group of the NodeB.

Preferably, the device further comprises a transferring component 306 which is configured to transfer, based on that a load of a certain NodeB exceeds a threshold value of the NodeB, at least part of the services of the NodeB to other NodeBs within the group according to the corresponding relationship; and/or transfer, based on that a load of a certain group exceeds a threshold value of the group, at least part of the services of the group to other groups according to the corresponding relationship.

In the preferred implementation of the embodiment of the present invention, various constituent parts in the device may combine with one another according to the method in the above-mentioned embodiments to complete corresponding functions and have the same beneficial effect, and details are not described in the embodiment of the present invention again.

### Embodiment III

Fig. 4 is a structural schematic diagram of a management object of a C-RAN network according to an embodiment of the present invention, and as shown in Fig. 4, on the basis of the original 3GPP standard model, an object "Group" is added, the properties are described as follows:

| **Property of the class Group** | **Property value** |
|---|---|
| Group ID | Group identifier |
| managedFunctions | List type, being a NodeBFunction set |

The property of the class Group comprises the group identifier (GroupID) and the managed logical functions (managedFunctions), wherein the type of the managedFunctions is a List type and the managedFunctions is a set of NodeBFunctions.

The specific requirements for the class named Group are as follows: I, the Group has a unique identifier under subnetworks; and II, the Group manages a group of NodeBFunctions, wherein each NodeBFunction is directly related with only one Group, and one NodeBFunction is not allowed to be managed by a plurality of Groups.

Two properties, i.e. the property of a self group (selfGroup) and the property of a related group (relatedGroupList) are newly added in the NodeB function (NodeBFuntion) of the original 3GPP standard model, and the properties are described as follows:

| **The property of class NodeBFunction** | **Property value** |
|---|---|
| selfGroup | Group type |
| RelatedGroupList | List type, being a Group set |

On the basis of the original property of the NodeBFunction, the newly added self group (selfGroup) indicates that the group to which the NodeB is subordinate and the type of selfGroup is a Group type, the newly added related group (RelatedGroupList) indicates at least one group to which the NodeB is related and is at least one group except the group to which the NodeB is subordinate, wherein the type of RelatedGroupList is a list (List) type and the RelatedGroupList is a set of groups.

The requirements of the two newly added properties of the NodeB function (NodeBFunction) are as follows: I, the selfGroup represents an object Group to which the NodeB is directly subordinate and is used for realizing the forwarding logic of a intra-group service flow; II, the relatedGroupList represents information about the group related to the NodeB and is used for realizing the distributing logic of a inter-group service flow; and III, the related group (relatedGroupList) cannot include the self group (selfGroup).

For a performance statistics model, the property groupID may be added to various counters, various kinds of service flow forwarding counters are added, and each counter additionally includes the properties of a source groupID and a target groupID.

On the basis of the existing table structure, the C-RAN NodeB may be managed by making a slight amendment which includes but is not limited to manners such as adding a Group table, adding fields to the NodeBFunction list, etc., so that the management of the C-RAN and the traditional network may realize compatibility.

### Embodiment IV

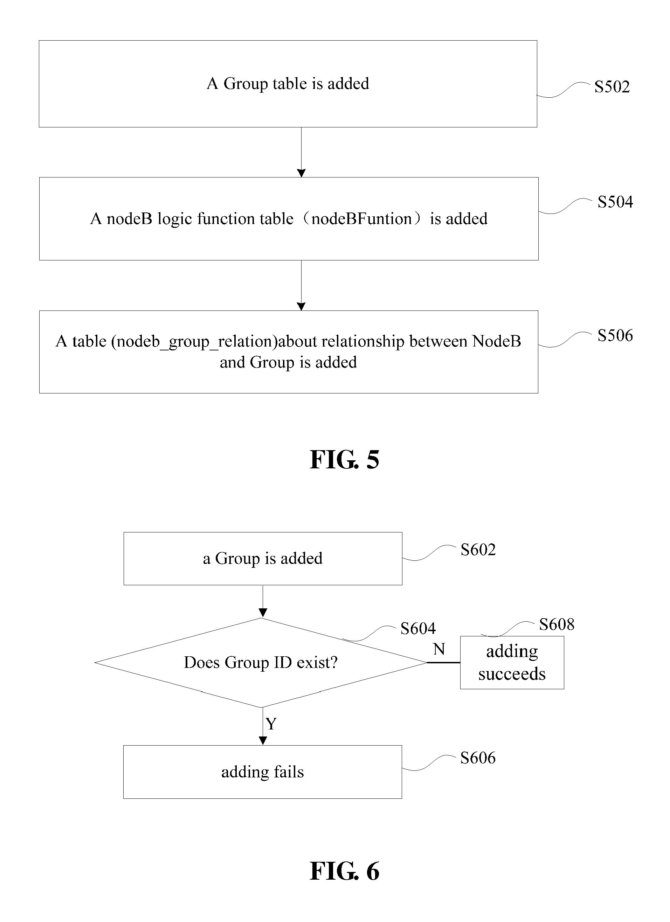

Fig. 5 is a flowchart of a coordinated management method in a C-RAN according to an embodiment of the present invention, and as shown in Fig. 5, the method comprises the following steps.

In step S502, a Group table is added.

A Group table is added according to the management object Mo model, wherein the table comprises the following fields:

| Property | Type | Description |
|---|---|---|
| GroupID | Int (integer) | Main key |
| userLabel/User friendly name | String (character string) | |
| Description/description | String (character string) | Description |

The Group table comprises three fields: GroupID, userLabel and Description. The GroupID is a group identifier and is a main key, and the type thereof is an integer; the UserLabel is a user friendly name and is a string type; and the Description is a description and is also a string type.

In step S504, a NodeB logic function (NodeBFuntion) table is added.

| Property | Type | Description |
|---|---|---|
| selfGroupID | Int | External key, with reference to the field GroupID in the Group table |

The table NodeBFuntion comprises a field selfGroupID, i.e. self group identifier, which is related to the field GroupID in the Group table and is an external key.

In step S506, a NodeB-group relation (Nodeb_Group_Relation) table is added.

| Property | Type | Description |
|---|---|---|
| RelatedGroup | Int (integer) | External key, with reference to the field GroupID in the Group table |
| NodeBfunctionID | String (character string) | External key, with reference to the field NodeBfunctionID in the NodeB table |

The nodeb_group_relation table comprises two fields: a related group (RelatedGroup) and a NodeB logic function identifier (NodeBfuntionID). The RelatedGroup is an external key and is related with the field GroupID in the Group table; and the NodeBfuntionID is an external key and is related with the NodeBflmtionID in the NodeB table.

### Embodiment V

Fig. 6 is a flowchart of adding a NodeB according to an embodiment of the present invention, in which a NodeB is set for managing groups by setting the selfGroupID in a NodeBFunction table. As shown in Fig. 6, the flow comprises the following steps.

In step S602, a group is added.

In step S604, it is judged whether a group ID exists.

It is judged whether a group ID exists, if yes, turn to step S606, otherwise, turn to step S608.

In step S606, the adding fails.

The adding flow is ended.

In step S608, the adding succeeds.

### Embodiment VI

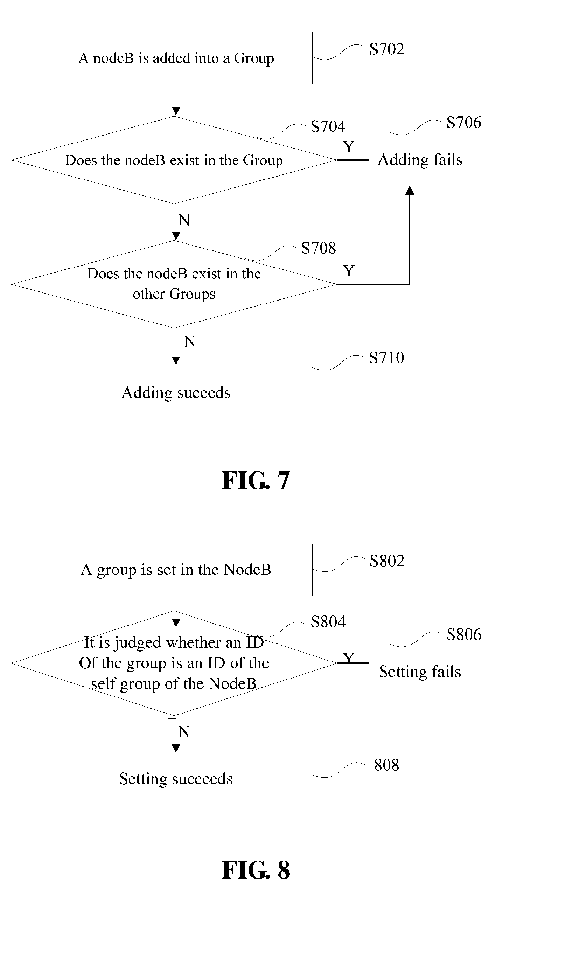

Fig. 7 is a flowchart of setting a relationship between a group and a NodeB according to an embodiment of the present invention, in which operations for the NodeB-group relation are set by adding recorded items in the nodeb_group_relation table. As shown in Fig. 7, the flow comprises the following steps.

In step S702, a NodeB is added into a group.

In step S704, it is judged whether a NodeB exists in the group.

If exits, step S706 is executed, otherwise, step S708 is executed.

In step S706, the adding fails.

The flow is ended.

In step S708, it is judged whether a NodeB exists in other groups.

If exits, step S706 is executed, otherwise, step S710 is executed.

In step S710, the adding succeeds.

### Embodiment VII

Fig. 8 is a flowchart of setting a relationship between a group and a NodeB according to an embodiment of the present invention, as shown in Fig. 8, the flow comprises the following steps.

In step S802, a group is set in the NodeB.

In step S804, it is judged whether an ID of the group is an ID of the self group of the NodeB.

If yes, step S806 is executed; otherwise, step S808 is executed.

In step S806, the setting fails.

In step S808, the setting succeeds.

### Embodiment VIII

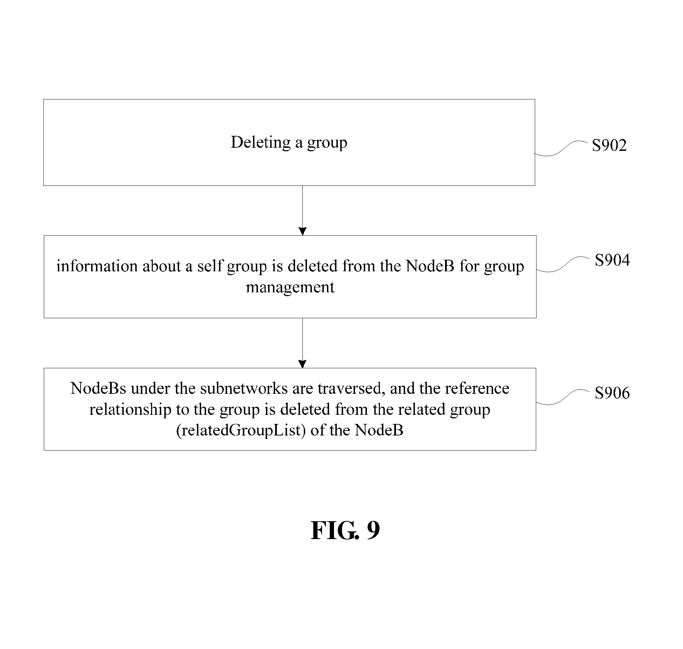

Fig. 9 is a flowchart of deleting a group according to an embodiment of the present invention, and as shown in Fig. 9, the flow comprises the following steps.

In step S902, a group is deleted.

In step S904, information about a self group is deleted from the NodeB for group management.

In step S906, NodeBs under the subnetworks are traversed, and the reference relationship to the group is deleted from the related group (relatedGroupList) of the NodeB.

When the Group is deleted, the relative records of the NodeB table will be deleted because of the reference relationship.

It can be seen from the description above that the embodiments of the present invention achieve the following technical effects: simple configuration, clear management level and good compatibility, whether an EMS or a third party for network management may conveniently perform co-management on the C-RAN and the traditional network. In addition, by adding the property GroupID to the performance counter, the service flow may counter the conditions of intra-group forwarding and inter-group forwarding and counter the overall performance of the group of the NodeB, so as to help a user to better decide the cluster change strategy of the NodeB.

Obviously, those skilled in the art should know that each of the mentioned components or steps of the present invention can be realized by universal computing devices; the components or steps can be focused on single computing device, or distributed on the network formed by multiple computing devices; selectively, they can be realized by the program codes which can be executed by the computing device; thereby, the components or steps can be stored in the storage device and executed by the computing device; and under some circumstances, the shown or described steps can be executed in different orders, or can be independently manufactured as each integrated circuit component, or multiple components or steps thereof can be manufactured to be single integrated circuit component, thus to be realized. In this way, the present invention is not restricted to any particular hardware and software combination.

The above description is only example embodiments of the present invention and is not intended to limit the present invention, and the present invention can have a variety of changes and modifications for ordinary person skilled in the field. Any amendments, equivalent substitutions, improvements, etc. within the principle of the present invention are all included in the scope of the protection as defined by the appended claims of the present invention.

### Industrial Applicability

As stated above, the method for managing a network and device have the following beneficial effects: simple configuration, clear management level and good compatibility, whether an EMS or a third party for network management may conveniently perform co-management on the C-RAN network and the traditional network. In addition, by adding the property of the GroupID to the performance counter, the service flow may counter the conditions of intra-group forwarding and inter-group forwarding and counter the overall performance of the group of the NodeB, so as to help a user to better decide the cluster change strategy of the NodeB.

## Claims

1. A method for managing a network, **characterized by** comprising:
adding a new class named Group in a 3GPP standard model; and
adding new properties, which are a self group and an related group in a NodeB Function (NodeBFunction), and establishing a corresponding relationship between the Group and a NodeB.

2. The method according to claim 1, **characterized in that** adding the new class named Group in the 3GPP standard model comprises:
adding the new class named Group in the 3GPP standard model, wherein properties of the Group comprises a unique group identifier and at least one NodeB function (NodeBFunction).

3. The method according to claim 1 or 2, **characterized in that** establishing the corresponding relationship between the Group and the NodeB comprises:
establishing a corresponding relationship between the NodeB and the self group of the NodeB and a corresponding relationship between the NodeB and the related group of the NodeB.

4. The method according to claim 3, **characterized in that** establishing the corresponding relationship between the NodeB and the self group of the NodeB and the corresponding relationship between the NodeB and the related group of the NodeB comprises:
establishing the corresponding relationship between the NodeB and the self group of the NodeB, wherein one self group corresponds to at least one NodeB, and one NodeB can only be subordinate to one self group; and
establishing a corresponding relationship between the NodeB and the related group of the NodeB, wherein the related group comprises at least one group except the self group of the NodeB.

5. The method according to any one of claims 1 to 4, **characterized in that** after the corresponding relationship between the group and the NodeB is established, the method further comprises at least one of the following:
based on that a load of a certain NodeB exceeds a threshold value of the certain NodeB, transferring at least part of services of the certain NodeB to other NodeBs within the Group or to a certain NodeB of other groups according to the corresponding relationship between the Group and the NodeB; and
based on that the load of the certain group exceeds a threshold value of the certain group, transferring at least part of services of the certain group to other groups according to the corresponding relationship.

6. The method according to any one of claims 1 to 5, **characterized in that**
the network comprises a Centralized Radio Access Network (C-RAN) and a traditional Radio Access Network (RAN).

7. A device for managing a network, **characterized by** comprising:
an adding component configured to add a new class named Group in a 3GPP standard model; and
an establishing component configured to add new properties, which are a self group and a related group, in a NodeB Function (NodeBFunction), and establishing a corresponding relationship between the Group and the NodeB.

8. The device according to claim 7, **characterized in that** the adding component is configured to add the new class named Group in a 3GPP standard model, wherein the properties of the Group comprises a unique group identifier and at least one NodeB Function (NodeBFunction).

9. The device according to claim 7 or 8, **characterized in that** the establishing component is configured to establish a corresponding relationship between the NodeB and the self group of the NodeB, wherein one self group corresponds to at least one NodeB, and one NodeB can only be subordinate to one self group, and establish a corresponding relationship between the NodeB and the related group of the NodeB, wherein the related group comprises at least one group except the self group of the NodeB.

10. The device according to any one of claims 7 to 9, **characterized in that** the device further comprises:
a transferring component configured to transfer, based on that a load of a certain NodeB exceeds a threshold value of the certain NodeB, at least part of services of the NodeB to other NodeBs within the group or to a certain NodeB of other groups according to the corresponding relationship between the Group and the NodeB; and/or transfer, based on that a load of a certain group exceeds a threshold value of the group, at least part of services of the group to other groups according to the corresponding relationship.
